# FASCICULE DE BREVET EUROPEEN

(11) **EP 1 740 012 B1**
(45) Date de publication et mention de la délivrance du brevet: **08.04.2015**
(21) Numéro de dépôt: 06291052.6
(22) Date de dépôt: 26.06.2006
(51) Int. Cl.: H04W 28/06, H04B 7/26, H04W 28/04, H04W 88/04

(54) **Procédé et système de transmission d'information entre deux terminaux mobiles**
Verfahren und System zum Informationsübertragen zwischen zwei mobilen Geräten
Method and system for transmitting information between two mobile terminals

(30) Priorité: 29.06.2005 FR 0506671
(43) Date de publication de la demande: 03.01.2007
(73) Titulaire: Orange, 75015 Paris (FR)
(72) Inventeur: Bourliataud, Christian, 78370 Plaisir (FR); Cassagnabere, Brice, 92190 Meudon (FR)
(74) Mandataire: Regimbeau

(56) Documents cités:
- EP-A- 1 309 153
- US-A- 5 513 242
- US-A- 5 969 678
- US-A1- 2001 034 239
- US-A1- 2003 224 799

## Description

La présente invention a pour objet un procédé de transmission d'informations entre deux terminaux dont l'un au moins peut entrer et sortir d'une zone de diffusion et une infrastructure de réseau pour la mise en oeuvre de ce procédé.

En particulier, cette invention s'adresse aux télécommunications sur réseaux sans fil, dans lesquels il est fréquent que des terminaux mobiles traversent des zones de diffusion, contiguës ou non, et, de ce fait, quittent occasionnellement ces zones de diffusion.

On connaît déjà des solutions pour transférer des informations vers des équipements mobiles avec voie de retour, basées sur des protocoles TCP/IP sur GPRS (General Packet Radio Service) et UMTS (Universal Mobile Télécommunications System). Ces solutions reposent sur le fait que le terminal mobile se connecte à un serveur et peut échanger des informations bi-directionnelles avec ce serveur de façon asynchrone. Dans ces réseaux, les terminaux mobiles traversent des zones de diffusion qui sont contiguës, voire se recouvrent, de sorte que le passage d'une zone à l'autre se fait en principe sans coupure de la liaison avec le serveur. En cas de coupure, la transmission s'interrompt et lorsque la liaison avec le serveur est rétablie, le transfert d'informations doit reprendre à son point de départ.

L'inconvénient de ces solutions connues est que la sortie des terminaux en dehors des zones de diffusion n'est pas gérée.

La présente invention vise à proposer une solution pour la transmission d'informations s'accommodant de coupures de liaisons, notamment lorsque les terminaux mobiles traversent des zones de diffusion non contiguës.

La présente invention s'applique non seulement aux terminaux mobiles se déplaçant dans des réseaux sans fil mais également à des terminaux que l'on déplace d'un premier sous-réseau filaire à un autre, en les débranchant et les rebranchant physiquement. Le débranchement du terminal correspond alors à sa présence en dehors de toute zone de diffusion, ce qui traduit le fait que les sous-réseaux ne sont pas contigus.

US 2001/0034 décrit un procédé de transmission de données entre un terminal mobile et au moins une station relais dans lequel les paquets de données sont transmis aux stations relais situées le long d'une trajectoire prédite.

US 5 513 242 décrit un système de communication entre un camion et des stations relais sans fil dans lequel les stations qui ne peuvent pas recevoir des données sont considérées comme étant indisponibles.

US 2003/224799 décrit un procédé de transmission de données dans lequel lorsque la transmission de données est interrompue par la sortie d'un terminal mobile hors d'une zone de diffusion, des moyens appropriés connus notamment dans le domaine du téléchargement de données sur Internet sont utilisés.

US 5 969 678 décrit un procédé de transmission entre un terminal mobile et au moins une station relais dans lequel lorsqu'une des stations relais détecte la présence d'un terminal, elle envoie un signal au réseau pour indiquer la position du terminal.

La présente invention a pour objet un procédé de transmission d'informations selon la revendication 1.

Grâce au procédé selon l'invention, on peut assurer des transmissions d'informations entre terminaux en dépit des entrées et des sorties d'au moins un terminal dans et hors des zones de diffusion.

Il faut noter qu'on entend par envoi entre un terminal et une station relais non seulement les envois depuis le terminal vers la station relais mais également les envois depuis la station relais vers le terminal.

Il faut noter également que le terme "terminal" désigne aussi bien des terminaux mobiles que des terminaux fixes, y compris des serveurs, dès lors que des transmissions d'informations entre eux sont envisagées.

Selon d'autres caractéristiques particulières de l'invention, qui peuvent être prises seules ou en combinaison :
- Lorsqu'un terminal entre dans une zone de diffusion, il se connecte à la station relais couvrant cette zone de diffusion et lui envoie un signal de présence, lequel signal de présence est renvoyé de la station relais à un site central.
- Lorsqu'un terminal sort d'une zone de diffusion, un signal d'absence est envoyé de la station relais à un site central. Grâce à ces caractéristiques, l'information de présence des terminaux est centralisée, ce qui permet en particulier de fournir une information sur la localisation des terminaux présents dans le réseau.
- En cas de réception, dans une station relais, d'un segment d'informations provenant d'un terminal et dont la destination est un terminal se trouvant, au moment de cette réception, dans la zone de diffusion couverte par la station relais, on retransmet ce segment d'informations au terminal destinataire. De cette manière, on effectue le transfert des segments vers le terminal destinataire tant qu'il peut les recevoir.
- En cas de réception, dans une station relais, d'un segment d'informations provenant d'un terminal et dont la destination est un terminal se trouvant, au moment de cette réception, dans une zone de diffusion non couverte par la station relais, on retransmet ce segment d'informations au site central. Comme précédemment, l'intérêt de cette caractéristique est d'effectuer le transfert des segments vers le terminal destinataire tant qu'il est présent sur le réseau.
- En cas de réception, dans une station relais, d'un segment d'informations provenant d'un terminal et dont la destination est le site central, on stocke ce segment d'informations dans la station relais et on attend la réception dans la station relais, d'une demande de transmission provenant du site central, pour retransmettre au site central les segments stockés dans la station relais. La station relais conserve ainsi toutes ses ressources disponibles pour recevoir les segments du terminal et profiter au maximum de la présence de ce dernier dans la zone de diffusion.
- Dans la même circonstance, et toujours dans le but de mobiliser toutes les ressources de la station relais à la réception des segments provenant du terminal, on attend soit la réception du dernier segment dans la station relais, soit la sortie du terminal de la zone de diffusion si cette sortie intervient avant la réception du dernier segment, pour signaler au site central que la station relais a reçu et stocké des segments destinés audit site central. La demande de transmission ne sera envoyée depuis le site central que lorsque le dernier segment aura été transmis par le terminal (à la même station relais ou à une autre).
- On associe à chaque terminal une station relais « préférée » et, en cas d'envoi d'informations par le site central vers ce terminal, on transfère et on stocke l'intégralité des segments d'informations correspondants dans cette station relais.

La présente invention a également pour objet une infrastructure de réseau selon la revendication 9.

La présente invention a également pour objet une station relais d'un réseau de communication selon la revendication 11.

Afin de faire mieux comprendre l'invention, on va en décrire maintenant des modes de réalisation donnés à titre d'exemples non limitatifs de la portée de l'invention, en référence aux dessins annexés dans lesquels :
- la figure 1 représente schématiquement une infrastructure à l'intérieur de laquelle se déplacent des terminaux mobiles,
- la figure 2 illustre, sur le diagramme de la figure 1, trois situations d'échanges de données,
- la figure 3 représente une partie des infrastructures des figures précédentes, constituée par trois zones de diffusion traversées par un terminal mobile,
- la figure 4A représente deux terminaux mobiles traversant une même zone de diffusion pendant une transmission d'informations entre eux,
- la figure 4B est une représentation des étapes du procédé mis en oeuvre sur la figure 4A,
- la figure 5A représente deux terminaux mobiles traversant chacun une zone de diffusion différente pendant une transmission d'informations entre eux,
- la figure 5B est une représentation des étapes du procédé mis en oeuvre sur la figure 5A,
- la figure 6A représente un terminal mobile entre deux zones de diffusion lors d'une transmission d'informations entre un site central et le terminal,
- la figure 6B est une représentation des étapes du procédé mis en oeuvre sur la figure 6A,
- la figure 7A, est analogue à la figure 6 et illustre une variante de mise en oeuvre du procédé de transmission d'informations,
- la figure 7B est une représentation des étapes du procédé mis en oeuvre sur la figure 7A,
- la figure 8A représente un terminal mobile traversant deux zones de diffusion lors d'une transmission d'informations entre le terminal mobile et un site central,
- la figure 8B est une représentation des étapes du procédé mis en oeuvre sur la figure 8A.

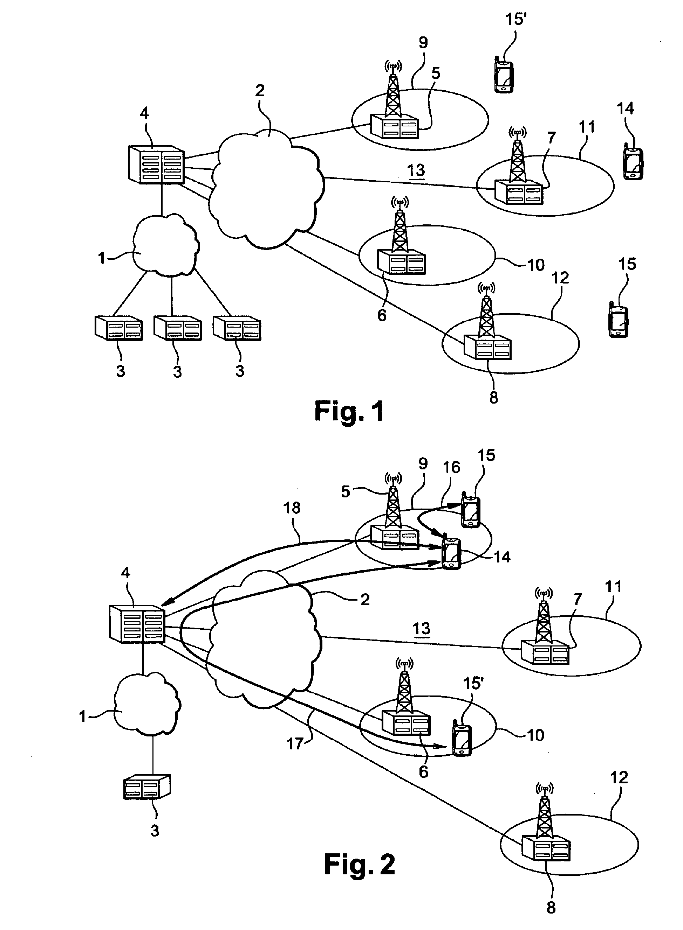

Sur la figure 1**,** on voit une infrastructure constituée par :
- un premier réseau de raccordement 1 et un second réseau de raccordement 2, qui peuvent être tous deux constitués par le réseau Internet,
- plusieurs serveurs d'application 3 raccordés via le premier réseau de raccordement 1 à un site central 4,
- le site central 4 qui est raccordé via le second réseau de raccordement 2 à des stations relais, ce site central 4 étant considéré comme un terminal fixe,
- les stations relais, également désignées bornes, 5, 6, 7, 8.

Chacune des stations relais 5, 6, 7, 8 couvre une zone de diffusion respective 9, 10, 11, 12, ces zones étant disjointes et non contiguës, de sorte qu'il subsiste entre elles un espace 13 qui n'est couvert par aucune station.

Trois terminaux mobiles 14, 15 et 15' sont susceptibles de traverser les zones de diffusion 9, 10, 11, 12, en y entrant et en en sortant à plusieurs reprises.

Chaque terminal mobile 14, 15, 15' en fonctionnement échange des données avec les stations relais 5, 6, 7, 8 selon un protocole qui comporte une couche réseau qui sera désignée dans la suite de la description « couche réseau du terminal ».

Chaque terminal, mobile ou fixe, du réseau, y compris le site central 4, possède un identifiant unique. Il en va de même pour chaque station relais.

Sur la figure 2, où l'on retrouve les mêmes éléments que sur la figure 1, on a illustré par des flèches 16, 17 et 18, trois situations de transmission d'informations dans le réseau.

Dans la situation illustrée par la flèche 16, les deux terminaux mobiles 14 et 15 se trouvent dans la même zone de diffusion 9 et échangent des informations via la station relais 5.

Dans la situation illustrée par la flèche 17, les deux terminaux mobiles 14 et 15' se trouvent dans des zones de diffusion 9, 10 différentes et non contiguës et échangent des informations via les deux stations relais 5, 6 et le site central 4.

Enfin, dans la situation illustrée par la flèche 18, le terminal mobile 14 échange des informations avec le terminal fixe que constitue le site central 4, via la station relais 5.

Ces trois situations de transmission d'informations couvrent la totalité des types élémentaires d'échanges qui peuvent se produire dans l'infrastructure décrite entre terminaux, mobiles ou fixes (le site central 4 étant considéré comme un terminal fixe), à condition de considérer uniquement des situations statiques, c'est-à-dire dans lesquelles aucun terminal mobile ne quitte la zone de diffusion dans laquelle il se trouve.

Lorsqu'au moins un des terminaux mobiles quitte sa zone de diffusion, il se produit un changement de situation de transmission, et ce changement peut intervenir pendant le déroulement d'une transmission d'information dans le réseau.

Par exemple, une transmission d'informations peut commencer dans la situation 17 dans laquelle le terminal mobile 14, qui se trouve dans la zone de diffusion 9, envoie des informations au terminal mobile 15' qui se trouve dans la zone de diffusion 10. Au cours de la transmission d'informations, le terminal mobile 15' peut sortir de la zone de diffusion 10 et, dans cette hypothèse, le terminal mobile 14 se met à transmettre ses informations au site central 4, ainsi que cela sera décrit ultérieurement, en se plaçant dans la situation de transmission d'informations 18. Ultérieurement, le terminal mobile 15' peut entrer à nouveau dans une zone de diffusion. Il reçoit alors du site central 4 les segments d'informations qu'il n'avait pas pu recevoir avant de quitter la zone de diffusion 10 et, de ce fait, le terminal mobile 15' se trouve à son tour dans la situation de transmission d'informations 18.

Il peut également se produire que les deux terminaux mobiles 14 et 15 commencent une transmission d'informations en étant tous deux présents dans la même zone de diffusion 9. Dans ce cas, la transmission d'informations commence dans la situation de transmission d'informations 16. Avant la fin de la transmission, le terminal mobile émetteur 14 peut quitter la zone de diffusion 9 puis entrer dans la zone de diffusion 10, la transmission d'informations du terminal 14 vers le terminal 15, qui avait commencé dans la première situation de transmission 16, se poursuit alors dans la situation de transmission 18, puis dans la situation de transmission 17.

L'invention procure donc une solution pour qu'une transmission d'informations initiée dans une première situation de transmission d'informations puisse se poursuivre même si l'un des terminaux mobiles quitte sa zone de diffusion, la transmission se poursuivant dans une autre situation de transmission d'informations.

A cet effet, l'invention prévoit, d'une part, un découpage des informations à transmettre en segments successifs (qui sont identifiés par des numéros), d'autre part, une surveillance des entrées et des sorties des zones de diffusion par les terminaux.

Le découpage des informations à transmettre en segments successifs permet de retrouver des conditions stables de transmission d'informations, dans le sens où, pendant la durée de transmission d'un segment, la probabilité est grande qu'un terminal ne quittera pas sa zone de diffusion.

De cette manière, la majorité des transmissions de segments d'informations se déroule dans des conditions quasi statiques, correspondant à l'une des trois situations décrites à la figure 2, et seule une minorité de segments d'informations voient leur transmission échouer du fait d'un changement de situation de transmission. Pour un segment dont la transmission a échoué, la transmission est reprise dans la nouvelle situation de transmission.

Ainsi, la taille des segments d'informations sera déterminée par l'homme du métier de manière que la transmission de chaque segment soit assez rapide, pour que, majoritairement, les segments soient transmis sans interruption, dans des conditions quasi statiques.

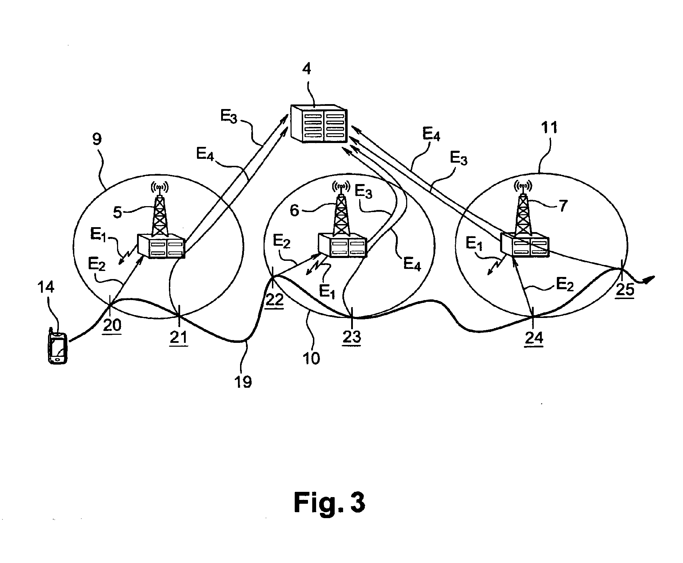

Sur la figure 3, on voit une partie d'infrastructure constituée par trois zones de diffusion 9, 10, et 11, couvertes chacune par sa station relais 5, 6, 7. Les stations relais sont raccordées au site central 4 (par une liaison non représentée sur cette figure), ainsi que cela a déjà été indiqué.

Un terminal mobile sans fil 14 suit une trajectoire 19.

Le long de cette trajectoire, le terminal mobile 14 commence par pénétrer dans la zone de diffusion 9 lorsqu'il arrive au point 20, quitte cette zone de diffusion 9 en arrivant au point 21, puis pénètre dans la zone de diffusion 10 au point 22 et la quitte au point 23, et enfin pénètre dans la zone de diffusion 11 au point 24, et la quitte au point 25.

L'entrée du terminal mobile 14 dans chacune des zones de diffusion, aux points 20, 22 et 24, déclenche la suite d'actions suivantes, que l'on désignera par la suite « procédure d'entrée ».

Début de la procédure d'entrée :
Lors de l'entrée dans une zone de diffusion, la couche réseau du terminal mobile 14 détecte la présence du réseau et une adresse IP est automatiquement attribuée au terminal mobile 14 selon un mécanisme bien connu.
Le terminal mobile 14 se met alors à l'écoute de tous les canaux applicatifs auxquels il a souscrit, toujours selon un mécanisme bien connu.
En plus de ces canaux applicatifs, le terminal mobile 14 se met également à l'écoute d'un canal de contrôle qui est un canal de communication sur lequel la station relais diffuse en permanence son adresse IP selon le mode IP/UDP (Internet Protocol / User Datagram Protocol) multicast (étape E1).
Le terminal mobile 14 récupère ainsi l'adresse IP de la station relais et établit une connexion TCP sur IP avec cette station sur un port préalablement configuré.
Une fois cette connexion établie, le terminal mobile 14 envoie un premier signal de présence (étape E2) qui inclut différents renseignements le caractérisant et en particulier :
   - son identifiant unique,
   - son quota, c'est-à-dire le nombre de canaux d'émission simultanés configurés pour ce terminal mobile 14 (ce qui permet une gestion multi-canaux à l'émission, comme cela est connu).

Dès que la connexion est établie entre le terminal 14 et la station relais 5, 6 ou 7, le terminal mobile 14 recharge dans sa mémoire, le cas échéant, son ou ses contextes d'émissions tels qu'ils ont été sauvegardés dans le terminal mobile 14 lors de la dernière interruption de transmission résultant de la sortie du terminal mobile 14 d'une zone de diffusion, comme lorsqu'il franchit les points 21, 23 ou 25.

La ou les éventuelles transmissions en cours peuvent reprendre au stade où elles avaient été précédemment interrompues. Pour un terminal mobile dont le quota est égal à 1, une seule transmission peut reprendre. Pour un terminal mobile dont le quota est supérieur à 1, plusieurs transmissions peuvent reprendre.

Dans la station relais, la réception du message de présence provenant du terminal mobile 14 provoque l'émission d'un second signal de présence, correspondant au premier signal de présence, complété de l'identifiant de la station relais, vers le site central 4 (étape E3).

De cette manière, le site central 4 est prévenu de la présence du terminal mobile 14 dans la zone de diffusion 9.

Si, lors d'une transmission précédente qui a été interrompue par la sortie du terminal mobile 14 d'une zone de diffusion, des segments d'informations n'ont pas pu être transmis au terminal mobile 14, ces segments sont transmis par le site central 4 via la station relais.

Fin de la procédure d'entrée.

On va maintenant décrire la suite d'opérations qui se déroulent lorsque le terminal mobile 14 quitte une zone de diffusion, par exemple aux points 21, 23, ou 25. Cette suite d'opération sera désignée par la suite « procédure de sortie ».

Début de la procédure de sortie :
Lorsque le terminal mobile 14 détecte la coupure de la connexion avec la station relais, il sauvegarde son contexte d'émission en cours (ou ses contextes d'émission en cours si son quota est supérieur à 1). Le contexte d'émission est caractérisé notamment par les éléments suivants :
   - référence unique de la transmission en cours,
   - numéro du prochain segment à envoyer,
   - identifiant unique du terminal de destination.

Dans la station relais 5, 6, 7, lorsque la coupure de la connexion est détectée, la station relais envoie au site central 4 un signal d'absence du terminal mobile 14 (identifié par son identifiant unique) de la zone de diffusion correspondante (étape E4).

Le site central 4 est ainsi informé du fait que le terminal mobile 14 vient de quitter la zone de diffusion et n'est donc plus accessible.

Fin de la procédure de sortie.

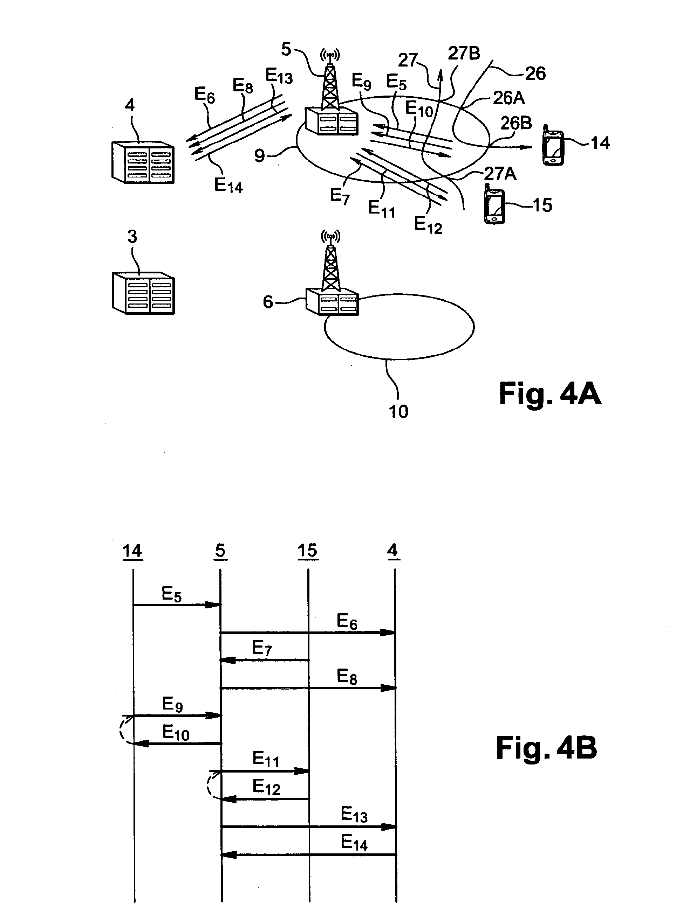

On va maintenant décrire, en référence aux figures 4A et 4B, la situation dans laquelle des informations sont transmises entre deux terminaux mobiles 14 et 15 présents dans une même zone de diffusion 9 couverte par une station relais 5, conformément à la situation de transmission 16 de la figure 2.

Le terminal mobile 14 suit une trajectoire 26 et le terminal mobile 15 une trajectoire 27.

Chaque trajectoire comporte un point d'entrée 26A, 27A et un point de sortie 26B, 278 de la zone de diffusion 9.

Lors de l'entrée aux points 26A et 27A, les terminaux mobiles 14 et 15, ainsi que la station relais 5, exécutent la procédure d'entrée précédemment décrite.

Ainsi, le terminal mobile 14 signale sa présence dans la zone de diffusion 9 en envoyant un signal de présence à la station relais 5 (étape E5).

A son tour, la station relais 5 signale la présence du terminal mobile 14 au site central 4 par l'envoi d'un signal de présence complété de l'identifiant unique de la station relais 5 (étape E6). Dans l'hypothèse décrite, il n'existe pas de contexte d'émission en cours sauvegardé dans le terminal mobile 14.

De son côté, le terminal mobile 15 envoie également un signal de présence à la station relais 5 (étape E7), laquelle émet un autre signal de présence à destination du site central 4 après l'avoir complété de son propre identifiant unique (étape E8).

Alors que les deux terminaux mobiles 14, 15 sont présents dans la zone de diffusion 9, des informations doivent être transmises au terminal mobile 15 par le terminal mobile 14.

Ces informations sont tout d'abord découpées, dans le terminal mobile 14, en segments d'informations qui sont numérotés consécutivement et forment une série de segments consécutifs.

Chacun de ces segments d'informations contient une fraction de l'information à transmettre, associée à différents paramètres, tels que le numéro du segment dans la série de segments consécutifs.

Le terminal mobile 14 envoie le premier segment d'informations, référencé par son identifiant unique émetteur, un identifiant unique destinataire qui est l'identifiant du terminal 15, une référence unique de transmission (étape E9).

Puis le terminal 14 se met en attente d'un acquittement.

Le premier segment est reçu par la station relais 5, qui l'acquitte envers le terminal mobile 14 (étape E10). La station relais 5 renvoie immédiatement le segment d'informations reçu vers le terminal mobile 15 (étape E11). A son tour, le terminal mobile 15 acquitte le segment reçu vers la station relais 5 (étape E12).

Dès réception de l'acquittement (étape E10), le terminal mobile 14 transmet le deuxième segment d'informations à la station relais 5, selon le même mode opératoire.

Aucun stockage des segments n'est effectué dans la station relais 5, ni aucune transmission au site central 4, afin que la présence simultanée des deux terminaux mobiles 14, 15 dans la zone de diffusion 9 soit mise à profit au maximum pour le transfert des segments entre eux.

Les étapes précédentes sont renouvelées tant qu'il reste des segments d'informations à transmettre et que les deux terminaux mobiles 14, 15 demeurent dans la zone de diffusion 9, c'est-à-dire tant que la situation de transmission d'informations 16 est maintenue.

Si le terminal mobile récepteur 15 sort de la zone de diffusion 9 avant la fin de la transmission complète de tous les segments d'informations, c'est-à-dire avant la réception par la station relais 5 de tous les acquittements provenant du terminal 15, la station relais 5 envoie au site central 4 un signal d'absence du terminal mobile 15 et cesse de lui envoyer des segments d'information. Elle se met à transmettre au site central 4 (étape E13) les segments reçus du terminal mobile émetteur 14 qui n'ont pas pu être retransmis au terminal récepteur 15. Le site central 4 acquitte les segments reçus à mesure de leur réception (étape E14) et les stocke dans son espace de stockage, en liaison avec l'identifiant unique du terminal 15.

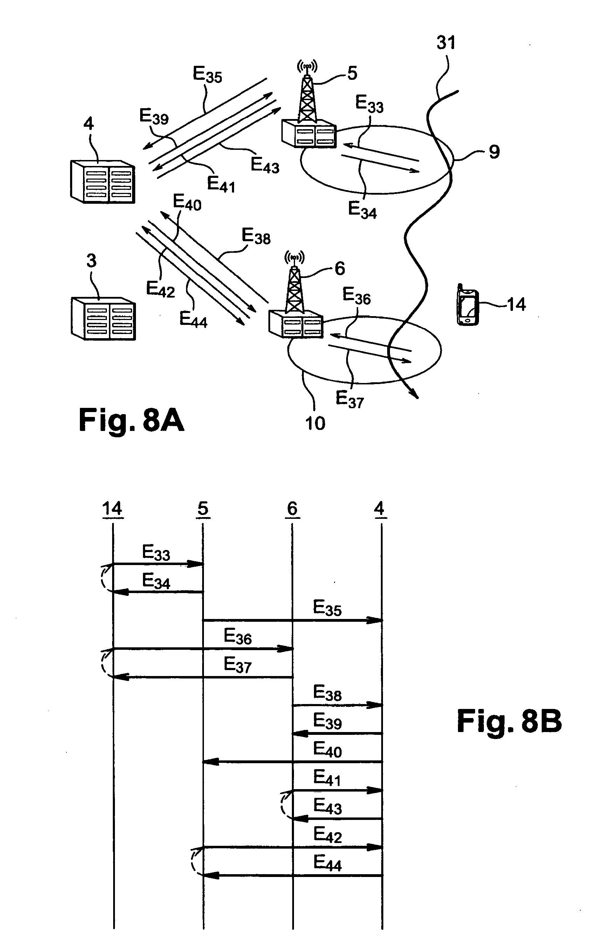

Le terminal mobile 14 se met donc à envoyer les segments au site central, selon la situation de transmission d'informations 18 entre terminal mobile et site central, qui sera décrite en référence aux figures 8A et 8B.

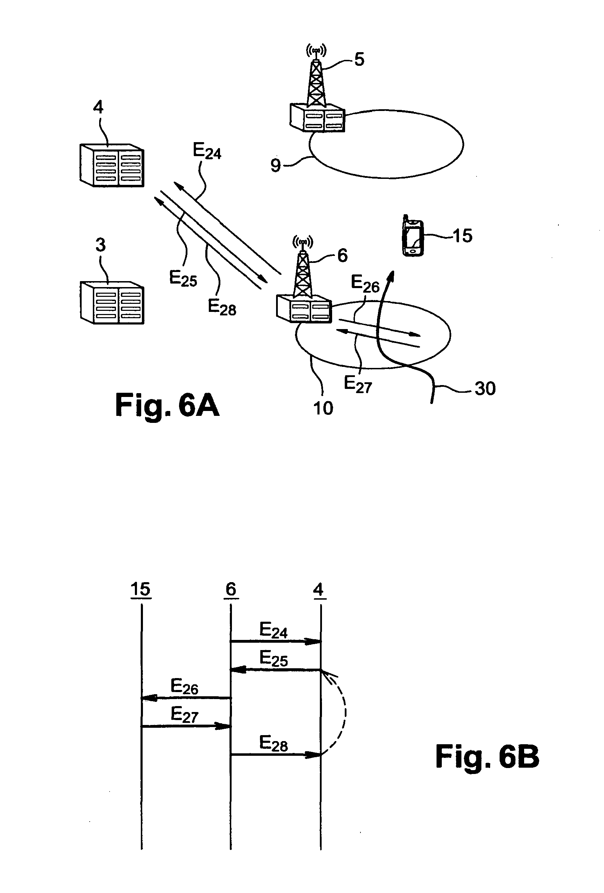

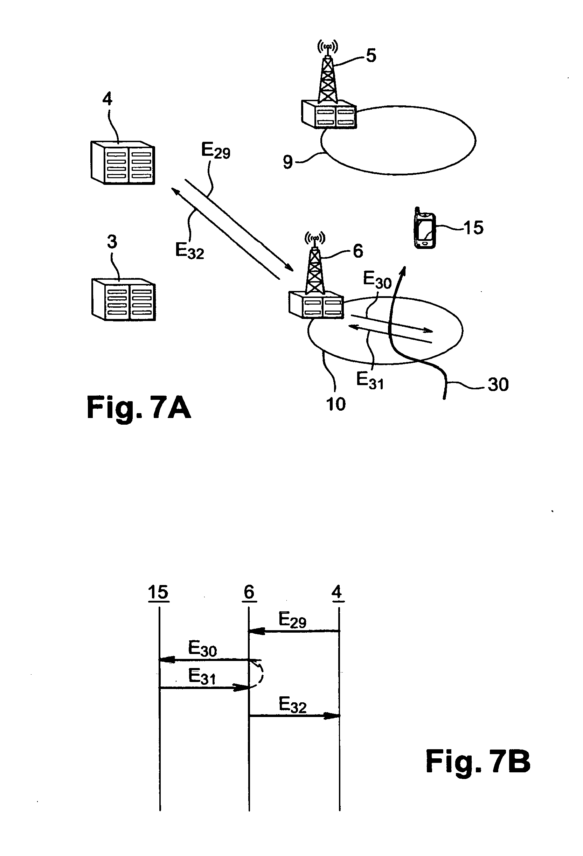

Les segments stockés dans le site central 4 seront ultérieurement transmis au terminal 15 quand ce dernier entrera à nouveau dans une zone de diffusion, selon la situation de transmission d'informations 18 entre site central et terminal mobile, décrite en référence aux figures 6A, 6B, 7A et 7B.

Si c'est le terminal mobile émetteur 14 qui sort de la zone de diffusion 9, ce terminal mobile 14 sauvegarde le contexte d'émission et cesse d'envoyer des segments d'information vers la station relais 5. Seuls les segments en cours de retransmission de la station relais 5 vers le terminal mobile récepteur 15 sont transmis à ce dernier.

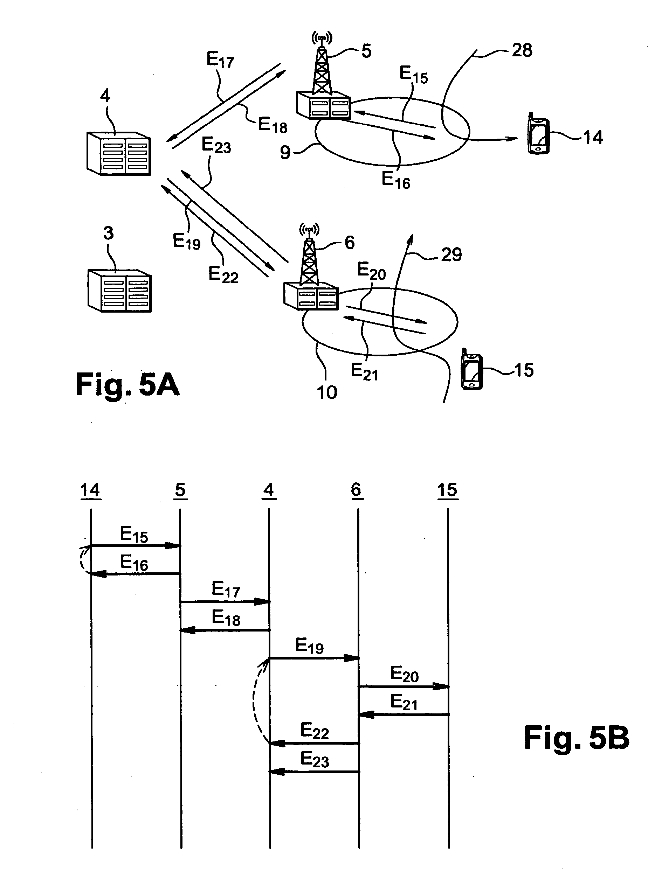

La transmission reprend plus tard, lorsque le terminal mobile émetteur 14 entre à nouveau dans une zone de diffusion, soit selon le même mode que celui qui vient d'être décrit si les deux terminaux mobiles 14, 15 se trouvent à nouveau dans la même zone de diffusion, soit selon un mode de transmission correspondant à la situation de transmission d'informations entre deux terminaux présents dans deux zones de diffusion différentes, qui sera décrite en référence à la figure 5.

Il est à noter que, dans la situation d'une transmission d'informations entre deux terminaux mobiles présents dans une même zone de diffusion, les segments d'informations ne sont pas stockés dans la station relais, ce qui permet d'accélérer le transfert des segments d'informations vers le terminal destinataire.

Il est également à noter que, pour un flux donné, c'est-à-dire pour une transmission de segments d'informations entre un terminal et la station, ou entre la station et un terminal, un segment d'informations ne peut être transmis que si son prédécesseur dans la succession de segments d'informations à transmettre a été acquitté par le destinataire.

En référence aux figures 5A et 5B, on va maintenant décrire le procédé de transmission d'informations entre deux terminaux mobiles se trouvant dans des zones de diffusion différentes et non contiguës, ce qui correspond à la situation de transmission d'informations 17 de la figure 2.

Dans cette situation de transmission, les échanges entre un terminal mobile 14 se trouvant dans une zone de diffusion 9 et un terminal mobile 15 se trouvant dans une zone de diffusion 10 se déroulent via les deux stations relais 5 et 6 et le site central 4.

Le terminal mobile 14 traverse la zone de diffusion 9 en suivant une trajectoire 28 et le terminal mobile 15 traverse la zone de diffusion 10 en suivant une trajectoire 29.

Comme cela vient d'être décrit en référence à la figure 4, l'entrée de chaque terminal 14, 15 dans sa zone de diffusion respective provoque le déclenchement dans le terminal 14, 15 et dans la station relais 5, 6 correspondante de la procédure d'entrée déjà décrite.

En conséquence, le site central 4 est informé de la présence des deux terminaux mobiles 14, 15, chacun dans sa zone de diffusion respective.

Le terminal mobile 14 est considéré comme terminal émetteur ayant des informations à transmettre au terminal mobile 15, considéré comme terminal récepteur.

Les informations sont tout d'abord découpées en segments d'informations numérotés consécutivement et formant une série de segments consécutifs.

Dans l'hypothèse où les informations à transmettre sont constituées par des segments qui n'ont pas pu être transmis en raison de la sortie du terminal mobile émetteur 14 au cours d'une transmission antérieure, le découpage a déjà eu lieu et le premier segment d'information à transmettre est celui dont la transmission avait échoué en raison de la sortie du terminal.

Le terminal mobile émetteur 14 envoie le premier segment d'informations, référencé par son identifiant unique émetteur, l'identifiant unique du terminal destinataire 15, et une référence unique de transmission (étape E15). Puis il se met en attente d'un acquittement.

La station relais 5 reçoit le segment et l'acquitte envers le terminal mobile émetteur 14 (étape E16), puis envoie immédiatement le segment vers le site central 4 (étape E17). Le site central 4 acquitte alors le segment vers la station relais 5 (étape E18), puis le sauvegarde.

Le terminal mobile émetteur 14, ayant reçu l'acquittement de la station relais 5 (étape E16), peut alors envoyer vers la station relais 5 le deuxième segment d'informations, selon le même protocole.

A réception du premier segment d'informations, le site central 4, qui a été informé de la présence du terminal mobile destinataire 15 dans la zone de diffusion 10, transfère immédiatement le segment à la station relais 6 (étape E19).

La station relais 6 envoie ce premier segment au terminal mobile destinataire 15 (étape E20), lequel acquitte le segment reçu à la station relais 6 (étape E21), et la station relais 6 acquitte à son tour le segment reçu au site central 4 (étape E22), ce qui permet à ce dernier d'effacer sa copie sauvegardée du segment d'informations.

Ces opérations sont renouvelées tant qu'il reste des segments d'informations à transmettre du terminal mobile émetteur 14 au terminal mobile destinataire 15 et que les deux terminaux mobiles 14, 15 demeurent dans leur zone de diffusion respective, c'est-à-dire tant qu'est maintenue la situation de transmission d'information 17.

Si le terminal mobile destinataire 15 sort de sa zone de diffusion avant la fin des transferts de tous les segments, la station relais 6 transmet au site central un signal de sortie du terminal 15 (étape E23) et le site central 4, ainsi informé, cesse de retransmettre vers la station relais 6 les segments d'informations qu'il reçoit de la station relais 5. Il les conserve dans son espace de stockage en association avec l'identifiant du terminal destinataire 15. La transmission des segments provenant du terminal mobile émetteur 14 se poursuit donc selon la situation de transmission 18 entre terminal et site central.

Cette situation de transmission aurait été adoptée d'emblée si le terminal mobile 15 n'avait pas été présent dans le réseau dès réception du premier segment par le site central 4.

Il est à noter que, pour accélérer la transmission des segments d'informations, les segments d'informations ne sont pas stockés dans les stations relais 5 et 6.

La règle précédemment énoncée selon laquelle, entre un terminal et la station relais, un segment d'informations ne peut être transmis que si le segment d'informations précédent a été acquitté par le destinataire, est toujours respectée.

Si c'est le terminal mobile émetteur 14 qui sort de la zone de diffusion 9, il sauvegarde le contexte d'émission en exécutant la procédure de sortie précédemment décrite. Les segments en cours d'acheminement jusqu'au terminal 15 sont acheminés et la transmission ne reprend que lorsque le terminal émetteur 14 entre à nouveau dans une zone de diffusion.

En référence aux figures 6A, 6B, 7A, 7B et 8A et 8B, on va maintenant décrire la transmission d'informations dans la situation 18 de la figure 2, entre un terminal mobile et le site central.

Différents cas sont considérés :
- les informations sont transmises du site central vers le terminal mobile, ce qui correspond à deux modes de transmission possibles, à savoir :

- sans prise en compte d'une station relais préférée, ou
- avec prise en compte d'une station relais préférée et
- les informations sont transmises entre le terminal mobile et le site central.

Sur la figure 6A, on voit un terminal mobile 15 qui traverse la zone de diffusion 10 couverte par la station relais 6, en suivant une trajectoire 30.

Pour envoyer des informations au terminal 15, le site central 4 commence par découper ces informations en segments successifs formant une série de segments consécutifs et chaque segment est stocké dans le site central 4. Cette première opération a lieu dès que la décision d'envoyer les informations est prise, indépendamment de la présence ou non du terminal mobile 15 dans le réseau.

Le découpage des informations en segments peut avoir eu lieu préalablement, si les informations à transmettre sont constituées de segments, provenant d'un terminal mobile émetteur, qui n'ont pu être transmis au terminal mobile 15 en raison de son absence du réseau.

Dès que la présence du terminal mobile 15 dans le réseau est signalée au site central 4, grâce à l'exécution de la procédure d'entrée, le site central 4 reçoit de la station relais 6 son identifiant unique (étape E24), ce qui lui permet d'envoyer le premier segment à cette station relais 6, puis de se mettre en attente d'acquittement (étape E25).

La station relais 6 reçoit ce premier segment et le retransmet au terminal mobile 15 (étape E26), qui l'acquitte (étape E27). L'acquittement est répercuté au site central 4 (étape E28), lequel peut alors :
- envoyer le deuxième segment à la station relais 6,
- effacer le premier segment de sa zone de stockage.

Ces opérations se répètent jusqu'à réception par le site central 4 de l'acquittement pour le dernier segment à transmettre.

Si le terminal mobile 15 quitte la zone de diffusion 10 pendant la transmission, la procédure de sortie ménage les conditions pour une reprise du transfert des segments dans de bonnes conditions.

Dans une variante, dite « avec station relais préférée », illustrée par les figures 7A et 7B, pour chaque service applicatif auquel a souscrit le terminal mobile 15 peut être attachée une station relais préférée 6, ce qui traduit le fait que le terminal mobile 15 se trouve le plus souvent dans la zone de diffusion de cette station 6. Il peut s'agir par exemple de la zone couvrant le lieu de résidence ou le lieu de travail habituel du porteur du terminal mobile 15.

Dans cette variante, en plus des opérations déjà décrites, le site central 4 anticipe la présence attendue du terminal mobile 15 dans la zone de diffusion préférée 10 en envoyant à la station relais préférée 6 tous les segments à transmettre, indépendamment de la présence du terminal mobile 15 (étape E29). La station relais préférée 6 stocke les segments reçus, dans un répertoire correspondant à l'identifiant du terminal mobile 15. Les segments sont néanmoins conservés dans le site central 4.

Cette anticipation permet de réduire le temps nécessaire au transfert de tous les segments de la station relais au terminal mobile 15, puisque chaque segment est envoyé au terminal 15 (étape E30) immédiatement après réception par la station relais 6 de l'acquittement du terminal (étape E31) pour le segment précédent. On élimine ainsi l'attente correspondant au transfert du segment du site central 4 à la station relais 6.

La station relais 6 retransmet chaque acquittement au site central 4 (étape E32) et le site central 4 élimine les segments à mesure qu'il reçoit les acquittements correspondants.

Si le terminal mobile 15 quitte la zone de diffusion en cours de transmission, la procédure de sortie est exécutée, ce qui ménage les conditions d'une reprise ultérieure de la transmission. Si le terminal mobile 15 entre à nouveau dans la même zone de diffusion 10, la transmission reprend grâce à la procédure d'entrée. Si le terminal mobile 15 entre dans une autre zone de diffusion 9, la transmission reprend selon le mode « sans station relais préférée » mais dans ce cas, à mesure de la réception des acquittements par le site central 4, ce dernier envoie à la station relais préférée 6 un ordre d'élimination du segment de sa zone de stockage des segments à transmettre.

On va maintenant décrire, en référence aux figures 8A et 8B, une transmission d'informations du terminal mobile 14 vers le site central 4.

Le terminal mobile 14 traverse successivement les zones de diffusion 9 et 10, couvertes par les stations relais respectives 5 et 6, en suivant une trajectoire 31.

A l'entrée du terminal mobile 14 dans la zone de diffusion 9, l'exécution de la procédure d'entrée signale au site central 4 la présence du terminal mobile 14 dans la zone de diffusion 9 et permet la reprise d'éventuelles émissions en cours qui auraient été interrompues par une sortie de réseau antérieure et sauvegardées dans le contexte d'émission du terminal mobile 14.

Des informations doivent être transmises au site central 4 par le terminal mobile 14.

A cet effet, les informations sont découpées dans le terminal mobile 14 en une série de segments consécutifs (à moins que ce découpage n'ait déjà eu lieu s'il s'agit d'une reprise de transmission).

Le terminal mobile 14 commence par envoyer le premier segment à la station relais 5 (étape E33), ce premier segment étant référencé par son numéro, un identifiant unique d'émetteur, un identifiant unique de destinataire (le site central 4), une référence unique de transmission. Le terminal mobile 14 se met ensuite en attente d'un acquittement de la part de la station relais 5.

La station relais 5 stocke le segment dans son espace de stockage et envoie l'acquittement au terminal mobile 14 (E34), lequel peut alors envoyer le deuxième segment.

Ces opérations sont renouvelées pour des segments suivants.

Le terminal mobile 14 quitte ensuite la zone de diffusion 9 avant la fin de la transmission. La station 5 détecte sa sortie et, selon la procédure de sortie, envoie un signal d'absence du terminal mobile 14 au site central 4, ainsi qu'un message informant le site central 4 qu'elle a reçu du terminal mobile 14 des segments qu'elle a stockés et qui sont destinés au site central 4 (étape E35).

De son côté, le site central 4 tient à jour une table contenant les références des transmissions courantes qui lui sont destinées en provenance des terminaux mobiles. Le site central 4 enregistre donc dans cette table le fait qu'il existe, dans la station relais 5, des segments provenant du terminal mobile 14.

Dans le terminal mobile 14, l'exécution de la procédure de sortie provoque la sauvegarde du contexte d'émission en cours.

Le terminal mobile 14 entre ensuite dans la zone de diffusion 10. Une nouvelle exécution de la procédure d'entrée provoque la restauration du contexte d'émission en cours dans le terminal mobile 14 et la récupération de l'adresse IP de la station relais 6. Par la restauration du contexte d'émission en cours, le terminal mobile 14 récupère notamment le numéro du prochain segment à envoyer.

La station relais 6 envoie au site central 4 un message de présence du terminal mobile 14 dans la zone de diffusion 10.

Le terminal mobile 14 envoie alors le prochain segment à envoyer à la station relais 6 (étape E36), laquelle l'acquitte et le stocke dans son espace de stockage (étape E37).

Ces opérations se renouvellent jusqu'à ce que le dernier segment ait été reçu et acquitté par la station relais 6. Ce dernier segment se manifeste par un indicateur positionné par le terminal mobile 14 dans le corps du segment.

La station relais 6 transmet alors au site central 4 un message l'informant, d'une part, qu'elle a reçu du terminal mobile 14 des segments qu'elle a stockés et qui sont destinés au site central 4, d'autre part, que tous les segments ont été transmis par le terminal 14 (étape E38).

A réception de ce message, le site central 4 envoie un message de collecte aux deux stations relais 5 (étape E39) et 6 (étape E40). La collecte se fait en parallèle en commençant par la station relais 6 qui a signalé la réception du dernier segment, afin de libérer au plus vite les ressources sur cette station relais 6.

Dans une variante, le serveur attend de recevoir aussi un message d'absence du terminal mobile 14 de la zone de diffusion 10, en provenance de la station relais 6, de manière à laisser les ressources de la station relais 6 disponibles pour des échanges avec le terminal mobile 14, tant que ce dernier se trouve dans la zone de diffusion 10.

Ayant envoyé son message de collecte, le site central 4 reçoit les segments des stations relais 6 (étape E41) et 5 (étape E42) et les acquitte (étape E43 et étape E44) au fur et à mesure. Les stations relais 5, 6 effacent les segments de leurs zones de stockage à mesure des acquittements.

Une fois reconstituées, par rapprochement de tous les segments sur le site central 4, les informations sont mises à disposition pour un éventuel serveur d'application 3.

On peut noter que les segments sont stockés sur les stations relais des zones de diffusion traversées par le terminal mobile avant d'être transmis au site central, afin que les ressources des stations relais soient au maximum consacrées à la réception des segments provenant du terminal mobile tant que ce dernier se trouve dans la zone de diffusion correspondante.

Il est bien entendu que les modes de réalisation qui viennent d'être décrits ne présentent aucun caractère limitatif et qu'ils pourront recevoir toute modification désirable sans sortir pour cela du cadre de l'invention. Le cadre de l'invention étant défini par l'objet des revendications 1, 9, et 11.

## Revendications

1. Procédé de transmission d'informations entre deux terminaux (4, 14, 15, 15') dont l'un au moins peut entrer dans une zone de diffusion (9, 10,11,12) couverte par au moins une station relais (5, 6, 7, 8) et sortir de cette zone, dans lequel les informations sont découpées en une série de segments consécutifs et transmises d'un terminal à l'autre via au moins une station relais, et dans lequel toute entrée d'un terminal dans la zone de diffusion est signalée par un signal de présence et toute sortie d'un terminal de la zone de diffusion est détectée par la station relais, et dans lequel :
- l'envoi d'un segment d'informations entre un terminal et une station relais est conditionné par la présence du terminal dans la zone de diffusion couverte par la station relais ;
- en cas de réception, dans une station relais (5), d'un segment d'informations provenant d'un terminal (14) et dont la destination est un autre terminal (15) se trouvant, au moment de cette réception, hors de la zone de diffusion (9) couverte par la station relais (5), on retransmet ce segment d'informations à un site central (4), et
- en cas de réception, dans une station relais (5, 6), d'un segment d'informations provenant d'un terminal (14) et dont la destination est le site central (4), on stocke ce segment d'informations dans la station relais (5, 6), et on attend soit la réception du dernier segment dans la station relais (6), soit la sortie du terminal de la zone de diffusion (9) si cette sortie intervient avant la réception du dernier segment, pour signaler au site central (4) que la station relais (6) a reçu et stocké des segments destinés audit site central (4).

2. Procédé selon la revendication 1, dans lequel, lorsqu'un terminal (14, 15, 15') entre dans une zone de diffusion (9, 10, 11, 12), il se connecte à la station relais (5, 6, 7, 8) couvrant cette zone de diffusion et lui envoie un signal de présence, lequel signal de présence est renvoyé de la station relais (5, 6, 7, 8) à un site central (4).

3. Procédé selon l'une des revendications 1 et 2, dans lequel, lorsqu'un terminal (14, 15, 15') sort d'une zone de diffusion (9, 10,11, 12), un signal d'absence est envoyé de la station relais (5, 6, 7, 8) à un site central (4).

4. Procédé selon l'une quelconque des revendications 1 à 3, dans lequel, en cas de réception, dans une station relais (5), d'un segment d'informations provenant d'un terminal (4, 14) et dont la destination est un terminal (15) se trouvant, au moment de cette réception, dans la zone de diffusion (9) couverte par la station relais, on retransmet ce segment d'informations au terminal destinataire (15).

5. Procédé selon l'une quelconque des revendications 1 à 4, dans lequel, lorsque le terminal (15) se trouve dans une autre zone de diffusion (10) couverte par une autre station relais (6), le site central (4) retransmet le segment d'informations au terminal (15) via la station relais (6).

6. Procédé selon l'une quelconque des revendications 1 à 5, dans lequel on attend la réception dans la station relais, d'une demande de transmission provenant du site central (4), pour retransmettre au site central les segments stockés dans la station relais.

7. Procédé selon l'une quelconque des revendications 1 à 6, dans lequel on associe à chaque terminal (15) une station relais « préférée » (6) et, en cas d'envoi d'informations par le site central vers ce terminal, on stocke l'intégralité des segments d'informations correspondants dans cette station relais.

8. Procédé selon l'une quelconque des revendications 1 à 7, dans lequel l'envoi d'un segment est également conditionné par la réception d'un acquittement relatif à l'envoi d'un segment précédent, s'il existe, dans la série des segments consécutifs.

9. Infrastructure de réseau comprenant au moins un site central (4), une station relais (5, 6, 7, 8) reliée au site central et un terminal (14, 15, 15') apte à se connecter à la station relais, infrastructure dans laquelle le site central, la station relais et le terminal sont programmés pour mettre en oeuvre le procédé selon l'une quelconque des revendications 1 à 8.

10. Infrastructure de réseau selon la revendication 9, dans laquelle la station relais (5, 6, 7, 8) et le terminal (14,15,15') communiquent par liaison sans fil.

11. Station relais d'un réseau de communication constitué par des zones de diffusion (9, 10, 11, 12) couvertes chacune par au moins une station relais (5, 6, 7, 8), la station relais comportant :
- des moyens pour recevoir un signal de présence d'un terminal dans la zone de diffusion de la station relais,
- des moyens pour détecter l'absence d'un terminal hors de sa zone de diffusion,
- des moyens pour conditionner l'envoi d'un segment d'information vers un terminal par la présence du terminal dans sa zone de diffusion,
- des moyens pour envoyer des segments vers un terminal, programmés pour retransmettre un segment d'informations à un site central en cas de réception de ce segment en provenance d'un terminal et à destination d'un autre terminal se trouvant, au moment de cette réception, hors de sa zone de diffusion,
la station relais étant en outre configurée pour, en cas de réception d'un segment d'informations provenant d'un terminal (14) et dont la destination est le site central (4), stocker ce segment d'informations et attendre soit la réception du dernier segment soit la sortie du terminal de la zone de diffusion (9) si cette sortie intervient avant la réception du dernier segment, pour signaler au site central (4) qu'elle a reçu et stocké des segments destinés audit site central (4).

12. Station relais selon la revendication 11, comportant des moyens de stockage de segments.

13. Station relais selon la revendication 11 ou 12, dans lequel les moyens pour envoyer sont également programmés pour n'envoyer un segment à un terminal qu'après la réception d'un acquittement relatif à l'envoi d'un segment précédent, s'il existe, dans la série des segments consécutifs.

## Patentansprüche

1. Verfahren zum Übertragen von Informationen zwischen zwei Geräten (4, 14, 15, 15'), von denen mindestens eines in eine Diffusionszone (9, 10, 11, 12) eintreten kann, die durch mindestens eine Relaisstation (5, 6, 7, 8) abgedeckt ist, und aus dieser Zone austreten kann, bei dem die Informationen in eine Reihe von aufeinanderfolgenden Segmenten zerschnitten und von einem Gerät zum anderen über mindestens eine Relaisstation übertragen werden, und bei dem jeder Eintritt eines Geräts in die Diffusionszone durch ein Anwesenheitssignal angezeigt wird, und jeder Austritt eines Geräts aus der Diffusionszone durch die Relaisstation erfasst wird, wobei:
- das Senden eines Informationssegment zwischen einem Gerät und einer Relaisstation durch die Anwesenheit des Geräts in der durch die Relaisstation abgedeckten Diffusionszone bedingt ist;
- im Falle eines Empfangs in einer Relaisstation (5) eines Informationssegments, das von einem Gerät (14) kommt und dessen Bestimmung ein anderes Gerät (15) ist, das sich zum Zeitpunkt dieses Empfangs außerhalb der Diffusionszone (9) befindet, die durch die Relaisstation (5) abgedeckt ist, dieses Informationssegment an einen zentralen Standort (4) wieder übertragen wird, und
- im Falle eines Empfangs in einer Relaisstation (5, 6) eines Informationssegments, das von einem Gerät (14) kommt und dessen Bestimmung der zentrale Standort (4) ist, dieses Informationssegment in der Relaisstation (5, 6) gespeichert wird und entweder auf den Empfang des letzten Segments in der Relaisstation (6) oder den Austritt des Geräts aus der Diffusionszone (9) gewartet wird, wenn dieser Austritt vor dem Empfang des letzten Segments stattfindet, um dem zentralen Standort (4) anzuzeigen, dass die Relaisstation (6) Segmente, die für den zentralen Standort (4) bestimmt sind, empfangen und gespeichert hat.

2. Verfahren nach Anspruch 1, bei dem, wenn ein Gerät (14, 15, 15') in eine Diffusionszone (9, 10, 11, 12) eintritt, sich dieses an die Relaisstation (5, 6, 7, 8), die diese Diffusionszone abdeckt, anschließt und ihr ein Anwesenheitssignal sendet, wobei dieses Anwesenheitssignal von der Relaisstation (5, 6, 7, 8) wieder an einen zentralen Standort (4) zurückgesandt wird.

3. Verfahren nach einem der Ansprüche 1 und 2, bei dem, wenn ein Gerät (14, 15, 15') aus einer Diffusionszone (9, 10, 11, 12) austritt, ein Abwesenheitssignal von der Relaisstation (5, 6, 7, 8) an einen zentralen Standort (4) gesandt wird.

4. Verfahren nach einem der Ansprüche 1 bis 3, bei dem im Falle des Empfangs in einer Relaisstation (5) eines Informationssegments, das von einem Gerät (4, 14) kommt, und dessen Bestimmung ein Gerät (15) ist, das sich zum Zeitpunkt dieses Empfangs in der Diffusionszone (9) befindet, die durch die Relaisstation abgedeckt ist, dieses Informationssegment wieder an das Bestimmungsgerät (15) übertragen wird.

5. Verfahren nach einem der Ansprüche 1 bis 4, bei dem, wenn sich das Gerät (15) in einer anderen Diffusionszone (10) befindet, die durch eine andere Relaisstation (6) abgedeckt ist, der zentrale Standort (4) das Informationssegment über die Relaisstation (6) wieder an das Gerät (15) überträgt.

6. Verfahren nach einem der Ansprüche 1 bis 5, bei dem auf den Empfang eines Antrags auf Übertragung, der von dem zentralen Standort (4) kommt, in der Relaisstation gewartet wird, um die in der Relaisstation gespeicherten Segmente wieder an den zentralen Standort zu übertragen.

7. Verfahren nach einem der Ansprüche 1 bis 6, bei dem jedem Gerät (15) eine bevorzugte" Relaisstation (6) zugeordnet wird, und im Falle des Sendens von Informationen durch den zentralen Standort zu diesem Gerät die Gesamtheit der entsprechenden Informationssegmente in dieser Relaisstation gespeichert wird.

8. Verfahren nach einem der Ansprüche 1 bis 7, bei dem das Senden eines Segments auch durch den Empfang einer Quittung zur Entsendung eines vorhergehenden Segments, falls vorhanden, in der Reihe der aufeinanderfolgenden Segmente bedingt ist.

9. Netzinfrastruktur, umfassend mindestens einen zentralen Standort (4), eine Relaisstation (5, 6, 7, 8), die mit dem zentralen Standort verbunden ist, und ein Gerät (14, 15, 15'), das geeignet ist, sich an die Relaisstation anzuschließen, wobei in dieser Infrastruktur der zentrale Standort, die Relaisstation und das Gerät derart programmiert sind, dass das Verfahren nach einem der Ansprüche 1 bis 8 eingesetzt wird.

10. Netzinfrastruktur nach Anspruch 9, bei der die Relaisstation (5, 6, 7, 8) und das Gerät (14, 15, 15') durch eine drahtlose Verbindung kommunizieren.

11. Relaisstation eines Kommunikationsnetzes, das von Diffusionszonen (9, 10, 11, 12) gebildet ist, die jeweils von mindestens einer Relaisstation (5, 6, 7, 8) abgedeckt sind, wobei die Relaisstation umfasst:
- Mittel, um ein Anwesenheitssignal eines Geräts in der Diffusionszone der Relaisstation zu empfangen,
- Mittel, um die Abwesenheit eines Geräts aus seiner Diffusionszone zu erfassen,
- Mittel, um das Senden eines Informationssegments zu einem Gerät durch die Anwesenheit des Geräts in seiner Diffusionszone zu bedingen,
- Mittel, um Segmente zu einem Gerät zu senden, die derart programmiert sind, dass sie ein Informationssegment wieder zu einem zentralen Standort im Falle des Empfangs dieses Segments von einem Gerät kommend und bestimmt für ein anderes Gerät, das sich zum Zeitpunkt dieses Empfangs außerhalb seiner Diffusionszone befindet, übertragen,
wobei die Relaisstation ferner derart ausgeführt ist, dass sie im Falle des Empfangs eines Informationssegments, das von einem Gerät (14) kommt und dessen Bestimmung der zentrale Standort (4) ist, dieses Informationssegment speichert und entweder auf den Empfang des letzten Segments oder auf den Austritt des Geräts aus der Diffusionszone (9) wartet, wenn dieser Austritt vor dem Empfang des letzten Segments erfolgt, um dem zentralen Standort (4) anzuzeigen, dass sie Segmente, die für den zentralen Standort (4) bestimmt sind, empfangen und gespeichert hat.

12. Relaisstation nach Anspruch 11, umfassend Speichermittel für die Segmente.

13. Relaisstation nach Anspruch 11 oder 12, bei der die Mittel zum Senden auch derart programmiert sind, dass sie ein Segment an ein Gerät erst nach dem Empfang einer Quittung zur Entsendung eines vorhergehenden Segments, falls vorhanden, in der Reihe der aufeinanderfolgenden Segmente senden.

## Claims

1. Method for transmitting information between two terminals (4, 14, 15, 15') at least one of which can enter a broadcasting area (9,10,11,12) covered by at least one relay station (5,6,7,8) and exit this area, in which the information items are divided into a series of consecutive segments and transmitted from one terminal to the other via at least one relay station, and in which any entrance of a terminal into the broadcasting area is signalled by a presence signal and any exit of a terminal from the broadcasting area is detected by the relay station, and in which:
- the sending of a segment of information between a terminal and a relay station is conditional upon the presence of the terminal in the broadcasting area covered by the relay station;
- in the case of a relay station (5) receiving an information segment originating from a terminal (14) and the destination of which is another terminal (15) situated, at the time this segment is received, outside the broadcasting area (9) covered by the relay station (5), this information segment is retransmitted to a central site (4), and
- in the event of a relay station (5,6) receiving an information segment originating from a terminal (14) and the destination of which is the central
- site (4), this information segment is stored in the relay station (5,6), and either the receipt of the last segment in the relay station (6), or the exit of the terminal from the broadcasting area (9) if this exit occurs before the last segment is received, are awaited before signalling to the central site (4) that the relay station (6) has received and stored the segments intended for said central site (4).

2. Method according to Claim 1, in which, when a terminal (14, 15, 15') enters a broadcasting area (9,10,11,12),it connects to the relay station (5,6,7,8) covering this broadcasting area and sends it a presence signal, which presence signal is sent back from the relay station (5,6,7,8) to a central site (4).

3. Method according to one of Claims 1 and 2, in which, when a terminal (14, 15, 15' ) exits a broadcasting area (9,10,11,12), an absence signal is sent from the relay station (5,6,7,8) to a central site (4).

4. Method according to any one of Claims 1 to 3, in which, in the event of a relay station (5) receiving an information segment originating from a terminal (4,14) and the destination of which is a terminal (15) situated, at the time the information segment is received, in the broadcasting area (9) covered by the relay station, this information segment is retransmitted to the destination terminal (15).

5. Method according to any one of Claims 1 to 4, in which, when the terminal (15) is situated in another broadcasting area (10) covered by another relay station (6), the central site (4) retransmits the information segment to the terminal (15) via the relay station (6).

6. Method according to any one of Claims 1 to 5, in which the receipt by the relay station of a transmission request originating from the central site (4) is awaited before retransmitting the segments stored in the relay station to the central site.

7. Method according to any one of Claims 1 to 6, in which a "preferred" relay station (6) is associated with each terminal (15) and, in the event of information being sent to this terminal by the central site, the entirety of the corresponding information segments are stored in this relay station.

8. Method according to any one of Claims 1 to 7, in which the sending of a segment is also conditional upon the receipt of an acknowledgement relating to the sending of a previous segment, if it exists, in the series of consecutive segments.

9. Network infrastructure comprising at least one central site (4), a relay station (5,6,7,8) connected to the central site and a terminal (14, 15, 15') capable of connecting to the relay station, an infrastructure in which the central site, the relay station and the terminal are programmed to implement the method according to any one of Claims 1 to 8.

10. Network infrastructure according to Claim 9, in which the relay station (5,6,7,8) and the terminal (14,15,15') communicate by wireless connection.

11. Relay station of a communication network composed of broadcasting areas (9,10,11,12) each covered by at least one relay station (5,6,7,8), the relay station including:
- means for receiving a presence signal of a terminal in the broadcasting area of the relay station,
- means for detecting the absence of a terminal outside its broadcasting area,
- means for making the sending of an information segment to a terminal conditional upon the presence of the terminal in its broadcasting area,
- means for sending the segments to a terminal, programmed to retransmit an information segment to a central site in the event of the relay station receiving this segment originating from a terminal and intended for another terminal situated outside its broadcasting area at the time it is received,
the relay station being furthermore configured, on receiving an information segment originating from a terminal (14) and the destination of which is the central site (4), to store this information segment and await either the receipt of the last segment or the exit of the terminal from the broadcasting area (9) if this exit occurs before the last segment is received, before signalling to the central site (4) that it has received and stored the segments intended for said central site (4).

12. Relay station according to Claim 11, including means for storing segments.

13. Relay station according to Claim 11 or 12, in which the sending means are also programmed to send a segment to a terminal only after the receipt of an acknowledgement relating to the sending of a previous segment, if it exists, in the series of consecutive segments.
